# FASCICULE DE BREVET EUROPEEN

(11) **EP 1 922 323 B1**
(45) Date de publication et mention de la délivrance du brevet: **13.10.2010**
(21) Numéro de dépôt: 06794290.4
(22) Date de dépôt: 04.08.2006
(51) Int. Cl.: C07F 7/00, C07F 19/00

(54) **MATERIAU MIXTE MINERAL/ORGANIQUE**
MINERAL/ORGANISCHES VERBUNDMATERIAL
MINERAL/ORGANIC COMPOSITE MATERIAL

(30) Priorité: 05.08.2005 FR 0508383
(43) Date de publication de la demande: 21.05.2008
(73) Titulaire: Centre National de la Recherche Scientifique (CNRS), 75016 Paris (FR); UCBL Universite Claude Bernard De Lyon 1, 69622 Villeurbanne Cedex (FR)
(72) Inventeur: DANIELE, Stéphane, F-69100 Villeurbanne (FR)
(74) Mandataire: Tripoz, Inès
(86) Numéro de dépôt international: PCT/FR2006/001903
(87) Numéro de publication internationale: WO 2007/017586

(56) Documents cités:
- WO-A-93/21127
- WO-A-2005/094156

## Description

L'invention a pour objet un matériau mixte comprenant des nanoparticules toutes fonctionnalisées d'au moins un dérivé métallique, lesdites nanoparticules étant greffées par des dérivés d'acides organiques carboxyliques ou sulfonique.

Les matériaux mixtes « minéral/organique » présentent un intérêt sans cesse grandissant dans de nombreux domaines.

Divers travaux de recherches publiés dans les articles scientifiques montrent l'importance de ces matériaux mixtes et certains proposent déjà des procédés de préparation spécifiques pour un matériau mixte particulier. À ce titre, on peut citer par exemple les travaux de D. C. Schnitzler et coll. (Chem. Mater., 15, (2003), 4658-4665) dans lesquels il est question de nanoparticules hybrides (Ti, Sn)O₂ sur lesquelles est adsorbée de l'aniline qui est ensuite polymérisée sous sa forme émeraldine conductrice.

Le procédé de préparation par la voie sol-gel décrite par S. Daniele et coll. (J. Mater. Chem., 13, (2003), 342-346) est un procédé particulièrement bien adapté à la synthèse de nanoparticules de dioxyde de titane.

Les inventeurs ont maintenant découvert qu'il est possible de préparer des nanoparticules de dérivé métallique, par exemple d'oxyde de titane, sur lesquelles sont greffées, de manière covalente, des composés organiques de type acide carboxylique et/ou acide sulfonique, en particulier des acides carboxylique et/ou sulfoniques connus pour leur propriétés intrinsèques de d'agent protecteur contre les radiations ultraviolettes, dénommés ci-après « filtres solaires organiques ».

Ainsi, la présente invention concerne tout d'abord un matériau mixte comprenant :
- des nanoparticules d'au moins un dérivé métallique et
- au moins un composé organique dérivé d'acide carboxylique et/ou sulfonique, lié chimiquement de manière covalente auxdites nanoparticules par l'intermédiaire d'au moins une fonction carboxylique et/ou sulfonique, caractérisé en ce que les nanoparticules sont toutes fonctionnalisées.

Dans le matériau mixte selon l'invention, le dérivé métallique doit pouvoir se présenter sous une forme permettant la création d'une ou plusieurs liaisons de covalence avec le dérivé d'acide carboxylique et/ou sulfonique.

De manière générale, ledit dérivé d'acide est lié chimiquement de manière covalente audit dérivé métallique.

Ainsi, le dérivé métallique est avantageusement un métal sous forme oxydée ou réduite, de préférence sous forme oxydée. Par forme oxydée ou réduite, on entend principalement que le métal ne se trouve pas essentiellement sous la forme d'atome zéro-valent. Selon un mode de réalisation particulièrement avantageux de la présente invention, le dérivé métallique est un oxyde métallique.

Selon les applications envisagées pour le matériau mixte de l'invention, on préfère que ledit dérivé métallique ne soit pas toxique ni pour l'homme ni pour l'environnement. On préfère également que le dérivé métallique possède des propriétés semi-conductrices, et en particulier qu'il soit apte à absorber le rayonnement ultraviolet.

Ainsi le métal dudit dérivé métallique utilisable dans les matériaux mixtes selon la présente invention est de préférence choisi dans le groupe constitué par le titane, le zinc, l'étain, le cérium, le zirconium et le cuivre, et leurs mélanges, de préférence dans le groupe constitué par le titane, le zinc, l'étain, le cérium, et leurs mélanges.

Selon un mode de réalisation préféré, le dérivé métallique est un oxyde métallique, et est notamment choisi parmi le dioxyde de titane (TiO₂), le monoxyde de zinc (ZnO), le dioxyde d'étain (SnO₂), les oxydes de cérium (Ce₂O₃ et CeO₂), l'oxyde de zirconium (ZrO₂), les oxydes de cuivre (CuO et Cu₂O), et leurs mélanges. De manière tout à fait préférée, le dérivé métallique contient du titane sous sa forme oxydée, dioxyde de titane (TiO₂).

On préfère en outre les dérivés métalliques présentant des propriétés semi-conductrices. Ainsi, par exemple, parmi les oxydes précités, le dioxyde de titane (TiO₂), le monoxyde de zinc (ZnO), le dioxyde d'étain (SnO₂) et le dioxyde de cérium (CeO₂), et leurs mélanges présentent de telles propriétés semi-conductrices et représentent des dérivés métalliques préférés.

Le composé organique greffé sur les nanoparticules est un acide, sel ou ester, répondant à la formule :

R"-A-Y

dans laquelle
R" représente un radical hydrocarboné comportant éventuellement un ou plusieurs hétéroatomes choisis parmi oxygène, azote, soufre, phosphore, bore et sélénium ;
A-Y représente un groupement carboxylique COOY ou sulfonique SO₃Y, où Y est choisi parmi :
   - un atome d'hydrogène ;
   - un cation provenant d'une amine primaire, secondaire, tertiaire ou quaternaire, ou encore un cation ammonium ;
   - un cation d'un métal alcalin d'un métal alcalino-terreux du tableau périodique ;
   - un cation d'un élément de transition des groupes 3, 4, 5. 6, 7, 8. 9, 10, 11 et 12 du tableau périodique ou un cation d'un élément des groupes 13, 14, 15 et 16 du tableau périodique ou un cation d'un élément de la série des lanthanides du tableau périodique, à savoir Ce, Pr, Nd, Pm, Sm, Eu, Gd, Tb, Dy, Ho, Er, Tm, Yb et Lu ; et
   - un groupement hydrocarboné saturé ou insaturé linéaire, ramifié ou cyclique, comportant de 1 à 30 atomes de carbone.

Par « dérivé d'acide », on entend, dans la présente invention, le composé organique tel que défini ci-dessus (acide, sel ou ester) possédant au moins une fonction acide carboxylique COOY et/ou au moins une fonction acide sulfonique SO₃Y, dont au moins un atome Y est absent.

On préfère en outre que le composé organique comportant au moins une fonction carboxylique et/ou sulfonique comporte en outre au moins un noyau aromatique. De préférence encore, au moins une fonction acide carboxylique et/ou fonction acide sulfonique est portée par au moins un noyau aromatique.

Ainsi, les composés organiques utilisables pour les matériaux mixtes de la présente invention sont avantageusement choisis parmi tout composé organique comprenant au moins une fonction acide carboxylique et/ou au moins une fonction acide sulfonique, éventuellement sous forme de sel ou d'ester, et, à titre d'exemple on peut citer les acides carboxyliques, les acides sulfoniques, mais aussi les acides précités comportant également d'autres groupements fonctionnels, comme les acides aminés, naturels ou non naturels, les acides aminosulfoniques, les céto-acides carboxyliques et/ou sulfoniques, les hydroxy-acides carboxyliques et/ou sulfoniques, et autres, qu'ils soient linéaires, ramifiés, cycliques, saturés, insaturés, et/ou aromatiques.

On préfère en outre que le composé organique comprenant au moins une fonction acide carboxylique et/ou au moins une fonction acide sulfonique possède au moins 4 atomes de carbone, de préférence encore au moins 5 atomes de carbone, plus préférentiellement au moins 6 atomes de carbone, avantageusement au moins 7 atomes de carbone, et de manière tout à fait préférée au moins 8 atomes de carbone.

Selon un mode de réalisation de l'invention, les nanoparticules de dérivés métalliques sont greffées par un composé organique connu pour ses propriétés intrinsèques d'agent bloquant / absorbant les rayonnements ultraviolets, généralement connus sous la dénomination de « filtre solaire organique ». En particulier, les filtres solaires concernés sont tous les composés organiques possédant au moins une fonction acide carboxylique et/ou au moins une fonction acide sulfonique et absorbant le rayonnement UV dans la gamme de longueurs d'onde allant généralement de 250 nm à 400 nm, sans que ceci constitue toutefois une imite.

À titre d'exemple de filtres solaires organiques convenables pour la présente invention, on peut citer à titre non limitatif les composés vendus sous les dénominations commerciales PABA (acide *para*-aminobenzoïque), Uvinul MS-40^{®} (acide 5-benzoyl-4-hydroxy-2-méthoxybenzènesulfonique), Eusolex 232^{®} (acide 2-phénylbenzimidazole-5-sulfonique), Mexoryl SL^{®} (acide 3,3'-(1,4-phénylidène-diméthylidène)bis-(7,7-diméthyl-2-oxobicyclo[2,2,1]hept-1-yl-méthane-sulfonique) et ses sels), Mexoryl SX^{®} (acide α-(oxo-2-bomylidène-3)-toluène-4-sulfonique et ses sels), Parsol 340^{®} (2-cyano-3,3-diphénylacrylate de 2-éthylhexyle), le 4-méthoxycinnamate d'octyle), Uvinul P-25 (4-aminobenzoate d'éthyle éthoxylé), et autres filtres analogues.

On préfère tout particulièrement les filtres solaires suivants :
- PABA ou acide *para-*aminobenzoïque ;
- Eusolex 232^{®} ou acide 2-phénylbenzimidazole-5-sulfonique ; et
- Uvinul MS-40^{®} ou acide 5-benzoyl-4-hydroxy-2-méthoxybenzènesulfonique.

Selon un aspect tout particulièrement préféré de la présente invention, le matériau mixte selon la présente invention comprend des nanoparticules de dioxyde de titane greffées de manière covalente par au moins un dérivé d'un acide carboxylique et/ou sulfonique, par l'intermédiaire d'au moins une fonction carboxylique et/ou sulfonique.

En particulier, le matériau mixte selon la présente invention comprend des nanoparticules de dioxyde de titane greffées de manière covalente par au moins un dérivé d'un acide carboxylique et/ou sulfonique, par l'intermédiaire d'au moins une fonction carboxylique et/ou sulfonique, le dit acide étant choisi dans le groupe constitué par l'acide *para*-aminobenzoïque, l'acide 5-benzoyl-4-hydroxy-2-méthoxybenzènesulfonique, l'acide 2-phénylbenzimidazole-5-sulfonique, ainsi que leurs sels ou esters.

Il doit être néanmoins compris que dans le matériau mixte de l'invention l'ensemble des atomes métalliques peuvent être liés à au moins un dérivé d'acide carboxylique et/ou sulfonique, ou bien que seulement quelques uns des atomes métalliques de la nanoparticule peuvent être liés chimiquement à au moins un dérivé d'acide carboxylique et/ou sulfonique, les autres atomes métalliques, non liés chimiquement à un composé organique, étant alors présents dans la nanoparticule sous forme oxydée et/ou réduite, de préférence sous forme oxydée, de préférence encore sous forme d'oxyde. Par forme oxydée et/ou réduite, on entend principalement que le métal ne se trouve pas essentiellement sous la forme d'atome zéro-valent.

Schématiquement, et de manière théorique, le matériau mixte se présente sous la forme de nanoparticules de dérivé métallique à la surface desquelles est greffé au moins un dérivé d'acide carboxylique et/ou sulfonique, en particulier les nanoparticules présentent une surface essentiellement recouverte desdits dérivés liés chimiquement auxdites nanoparticules de dérivés métalliques.

Ainsi, le matériau mixte selon l'invention se présente sous la forme de particules de dérivé métallique, toutes fonctionnalisées par au moins un dérivé d'acide carboxylique et/ou sulfonique, et éventuellement à l'état cristallin, les dites particules présentant une granulométrie moyenne de l'ordre du nanomètre à quelques dizaines de nanomètres, de préférence une granulométrie comprise entre comprise entre 1 nm et 50 nm, de préférence encore entre 1 nm et 30 nm, plus préférentiellement entre 1 nm et 20 nm, avantageusement entre 2 nm et 10 nm.

Il doit être également compris que les dits dérivés d'acide carboxylique et/ou sulfonique sont greffés sur la surface des nanoparticules, et néanmoins peuvent être également inclus dans la nanoparticule elle-même.

Les nanoparticules du matériau mixte selon la présente invention peuvent être notamment obtenues au moyen du procédé de préparation décrit dans la suite de la présente description, et par exemple selon un procédé analogue à celui décrit par S. Daniele et coll. (J. Mater. Chem., 13, (2003), 342-346).

Ainsi, et selon un autre objet de la présente invention, le matériau mixte selon la présente invention peut avantageusement être obtenu par polymérisation inorganique (voie sol-gel), en une seule étape, d'au moins un précurseur hydrolysable d'au moins un métal, modifié par au moins un acide carboxylique et/ou sulfonique tel qu'il vient d'être défini.

Par précurseur hydrolysable d'un métal, on entend par exemple les alcoxydes, les amidures ou les halogénures d'un ou plusieurs des métaux décrits plus haut, en particulier des métaux dont les formes oxydées présentent des propriétés semi-conductrices. De préférence, les précurseurs sont choisis parmi les alcoxydes de métaux, de préférence encore les alcoxydes répondant à la formule (I) suivante :

[MOₓR'_{z}(AR")_{w}(OR)_{(v-2x-z-w)}]ₘ (I)

dans laquelle :
- M représente un atome de métal avantageusement choisi parmi le titane, le zinc, le cérium, le zirconium et le cuivre ;
- O représente l'atome d'oxygène ;
- v représente la valence du métal M ;
- x est un nombre supérieur ou égal à zéro et inférieur à v/2 ; (0 ≤ x < v/2) ;
- z est un nombre supérieur ou égal à zéro et inférieur à v ; (0 ≤ z < v) ;
- w est un nombre supérieur à zéro et inférieur ou égal à v ; (0 < w ≤ v) ;
- m est le taux d'oligomérisation du précurseur de formule (I) et représente un nombre entier supérieur ou égal à 1, de préférence compris entre 1 et 100, bornes incluses ;
- 2x + z + w ≤ v;
- A représente un groupe CO₂ ou SO₃ ;
- R est choisi parmi un radical alkyle, linéaire ou ramifié, comportant de 1 à 30 atomes de carbone, un radical cycloalkyle substitué ou non substitué comportant de 3 à 9 atomes de carbone endocycliques, et un radical aryle substitué ou non substitué comportant de 6 à 10 atomes ;
- R' représente un atome d'halogène choisi parmi fluor, chlore, brome, iode et astate, ou représente le groupe hydroxyle ; et
- R" représente un radical hydrocarboné comportant éventuellement un ou plusieurs hétéroatomes choisis parmi oxygène, azote, soufre, phosphore, bore et sélénium.

Selon un mode de réalisation particulièrement préféré de l'invention, le métal est le titane. Le composé de formule (I) devient le composé de formule (I_{Ti}) suivante :

[TiOₓR'_{z}(AR")_{w}(OR)_{(4-2x-z-w})]ₘ (I_{Ti})

dans laquelle :
- x est un nombre supérieur ou égal à zéro et inférieur à 2 ; (0 ≤ x < 2) ;
- z est un nombre supérieur ou égal à zéro et inférieur à 4 ; (0 ≤ z < 4) ;
- w est un nombre supérieur à zéro et inférieur ou égal à 4 ; (0 < w ≤ 4) ;
- 2x + z + w ≤ 4 ; et
- O m, R, R' et R" sont tels que définis précédemment ;

Selon une variante avantageuse, la polymérisation inorganique d'au moins un précurseur hydrolysable de formule (I) et/ou (I_{Ti}) peut être réalisée en présence d'un autre composé hydrolysable, par exemple alcoxyde, amidure ou halogénure, tel que défini précédemment, éventuellement non modifié par un composé organique, et en particulier, d'un autre composé métallique hydrolysable ne comportant pas de résidu d'acide carboxylique et/ou sulfonique.

La polymérisation inorganique (ou encore hydrolyse) simultanée de précurseurs modifiés par au moins un acide carboxylique et/ou sulfonique et de précurseurs « purs » (c'est-à-dire non modifiés), selon le procédé de l'invention, permettent de moduler la densité de composés organiques en surface de la nanoparticule métallique.

À titre d'exemple, et de manière non limitative, la polymérisation inorganique d'au moins un précurseur hydrolysable de formule (I) peut être réalisé en présence d'un autre composé hydrolysable de formule (II) suivante :

[M'(OR)_{v'}]_{m'} (II)

dans laquelle :
- M' représente un atome de métal identique ou différent de M, choisi parmi le titane, le zinc, le cérium, le zirconium et le cuivre ;
- m' est le taux d'oligomérisation du composé (II) et représente un nombre entier supérieur ou égal à 1, de préférence compris entre 1 et 100, bornes incluses ;
- v' représente la valence du métal M' ; et
- R est choisi parmi un radical alkyle, linéaire ou ramifié, comportant de 1 à 30 atomes de carbone, un radical cycloalkyle substitué ou non substitué comportant de 3 à 9 atomes de carbone endocycliques, et un radical aryle substitué ou non substitué comportant de 6 à 10 atomes ;

Lorsque le métal est le titane, le composé de formule (II) devient le composé de formule (II_{Ti}) suivante :

[Ti(OR)_{4]m'} (II_{Ti})

dans laquelle R et m' sont tels que définis précédemment.

La polymérisation inorganique indiquée ci-dessus peut être conduite en milieu hydro-organique, ou majoritairement ou purement aqueux. L'intérêt d'opérer en milieu purement aqueux est uniquement guidé par un souci de respect des réglementations et des orientations actuelles en matière de protection de l'environnement et de toxicité, notamment lorsque le matériau mixte de l'invention est susceptible d'être au contact d'organismes vivants, végétaux, animaux ou humains.

Lorsqu'un solvant organique est présent (polymérisation inorganique en milieu hydro-organique), celui-ci est avantageusement choisi parmi les alcools, de préférence les mono-alcools, et par exemple parmi le méthanol, l'éthanol, le *n*-propanol, l'*iso*-propanol, le *n*-butanol, l'*iso*-butanol et le *tert*-butanol et leurs mélanges en toutes proportions.

Cette liste n'est nullement limitative et d'autre solvants peuvent être utilisés, tels que les hydrocarbures insaturés, par exemple le toluène, les hydrocarbures saturés, par exemple l'hexane, les éthers aliphatiques ou les éthers cycliques, par exemple le diéthyléther ou le tétrahydrofurane, ainsi que les solvants de type diméthylformamide ou diméthylsulfoxyde. Des mélanges de deux ou plusieurs des solvants indiqués ici peuvent également être utilisés.

Selon un mode de réalisation préféré du procédé, la polymérisation inorganique est réalisée en présence d'au moins un sel ionique. Les sels ioniques appropriés peuvent être choisis parmi les nitrates, les halogénures, les sulfates ou encore les phosphates d'alcalins, d'alcalino-terreux ou d'ammonium et leurs mélanges de deux ou plusieurs d'entre eux en toutes proportions. À titre d'exemple, et de manière non limitative, le sel ionique peut être choisi parmi le nitrate de potassium, le bromure de lithium, le sulfate de magnésium, et le bromure de tétra-*n*-butylammonium. Un sel ionique préféré est le bromure de tétra-*n*-butylammonium.

La quantité de sel ionique utilisé peut varier dans de larges proportions, et est de généralement comprise entre 0,5% et 20% en poids, de préférence entre 1 % et 10% en poids, par rapport au précurseur métallique de départ.

La réaction de polymérisation inorganique s'effectue par mise en contact d'au moins un précurseur hydrolysable de métal modifié par au moins un acide carboxylique et/ou sulfonique tel que précédemment défini, éventuellement en présence d'un autre précurseur hydrolysable non modifié, avec de l'eau ou un mélange eau/solvant.

La quantité d'eau nécessaire pour la réaction de polymérisation inorganique peut également varier dans de larges proportions et, en règle générale, on emploie 100 mL d'eau pour une quantité de précurseur(s) métallique(s) comprise entre 0,1 g et 10 g. La quantité de solvant organique ou de mélange de solvants organiques est généralement comprise entre 0% et 20% en poids par rapport à la quantité d'eau utilisée.

La réaction de polymérisation inorganique est généralement conduite à une valeur de pH comprise entre 4 et 8, plus généralement entre 5 et 7.

Cette polymérisation inorganique peut être conduite à température ambiante ou encore à une température comprise entre la température ambiante et la température de reflux du milieu réactionnel, par exemple à une température comprise entre 15°C et 150°C, avantageusement entre 25°C et 130°C, de préférence entre 80°C et 120°C, de préférence environ 100°C.

Le chauffage du milieu réactionnel n'est cependant pas nécessaire mais favorise la formation des particules nanométriques sous forme cristallisée, plutôt que sous forme amorphe, c'est-à-dire que le matériau mixte obtenu présente des bandes de diffraction sous rayonnement X.

La réaction de polymérisation inorganique est généralement conduite à pression atmosphérique normale, pendant une durée variant de quelques dizaines de minutes à quelques heures, généralement entre une et trois heures, par exemple deux heures.

Le solide est extrait du milieu réactionnel, selon des techniques classiques connues de l'homme du métier, par exemple par centrifugation, lavé, rincé, puis séché.

Cette réaction de polymérisation permet d'obtenir, en une seule étape et dans des conditions très douces, un solide prêt à l'emploi, généralement cristallisé, sous forme de particules nanométriques, et fonctionnalisé, c'est-à-dire auquel est lié chimiquement, par liaison de covalence (ou co-ordination), au moins un dérivé d'un acide carboxylique et/ou sulfonique.

Ce matériau mixte est ainsi obtenu de manière très économique en une seule étape et en milieu aqueux ou hydro-organique, à partir de précurseurs métalliques modifiés aisément accessibles, et notamment à partir d'alcoxydes modifiés par un ou plusieurs acides carboxyliques et/ou sulfoniques, sels ou esters, de formule R"-A-Y, tels que définis précédemment. Il doit être compris que lorsque l'acide carboxylique et/ou sulfonique est sous forme d'ester, (Y étant un groupement hydrocarboné saturé ou insaturé linéaire, ramifié ou cyclique, comportant de 1 à 30 atomes de carbone), celui-ci doit préalablement être hydrolysé en acide ou en sel, selon des techniques d'hydrolyse classiques connues de l'homme du métier.

Lesdits précurseurs métalliques sont connus, disponibles dans le commerce, ou aisément synthétisés à partir de modes opératoires connus provenant d'ouvrages classiques de chimie, de publications, de brevets, des « Chemical Abstracts » ou encore de l'Internet.

En outre, le matériau mixte selon l'invention possède un taux de fonctionnalisation élevé et un accrochage efficace, par liaison de covalence, du dérivé d'acide carboxylique et/ou sulfonique, et donc une meilleure stabilité dans tout milieu dont le pH est compris entre 2 et 10.

Par « taux de fonctionnalisation », on entend le rapport pondéral composant organique/composant minéral du matériau mixte. Ce taux de fonctionnalisation est généralement compris entre 0,1% et 30%, de préférence entre 0,5% et 20%, avantageusement entre 1 % et 15%, par exemple entre 1,5% et 10%.

Le matériau mixte selon l'invention se présente sous forme de particules nanométriques telles qu'elles viennent d'être définies et possèdent l'avantage de présenter une dispersion compatible avec la plupart des applications envisagées. En effet une bonne dispersion des nanoparticules est représentative d'un faible taux d'agrégation des nanoparticules entre elles, ainsi qu'une granulométrie d'agrégats relativement faible.

Généralement, on note pour les matériaux mixtes de la présente invention, une granulométrie d'agrégats comprise entre 100 nm et 3000 nm, le plus souvent entre 150 nm et 2500 nm, en particulier entre 160 nm et 2200 nm pour des taux de fonctionnalisation allant d'environ 1,5% à 8%.

Les inventeurs ont en outre montré que la dispersion varie en fonction du taux de fonctionnalisation défini *supra,* ainsi que de la nature du composé organique greffé sur les nanoparticules.

Le matériau mixte de la présente invention convient à de nombreux domaines d'utilisation, tels que, et sans être limités à ceux-ci, la synthèse chimique organique et/ou inorganique, l'industrie pharmaceutique, le diagnostic médical, l'imagerie médicale, la cosmétique, le domaines des revêtements, encres, peintures, etc.

Par exemple, le matériau mixte selon la présente invention peut être utilisé en tant qu'agent protecteur contre le rayonnement ultraviolet dans des produits cosmétiques protecteurs du rayonnement solaire.

Les exemples qui suivent sont donnés à titre purement illustratif et n'ont pas de caractère limitatif.

### Exemple 1 : Préparation d'un matériau mixte TiO₂/acide para-aminobenzoïque

À partir de *para*-aminobenzoate tri-isopropoxvde de titane en milieu aqueux

| | |
|---|---|
| [Ti(OC₃H₇)₃(O₂CC₆H₄NH₂)]m | 0,9 g |
| Bromure de tétra-*n*-butylammonium (NⁿBu₄Br) | 0,08 g |
| Eau (H₂O) | 50 g |

Le [Ti(OC₃H₇)₃(O₂CC₆H₄NH₂)]ₘ est obtenu par réaction équimolaire entre le tétra-isoproxyde de titane [Ti(OC₃H₇)4] et l'acide *para*-aminobenzoïque (HO₂CC₆H₄NH₂, PABA). L'indice m correspond au nombre de précurseurs impliqués dans une maille cristalline.

On additionne le [Ti(OC₃H₇)₃(O₂CC₆H₄NH₂)]ₘ dans la solution aqueuse de NⁿBu₄Br portée à reflux et on agite en maintenant le reflux pendant 2 heures. Le solide est récupéré par centrifugation puis lavé à l'eau et à l'éthanol. Après séchage à 70°C pendant 20 heures le matériau est prêt à l'emploi. Le matériau présente un taux de fonctionnalisation de 7,6% en poids.

### Exemple 2 : Préparation d'un matériau mixte TiO₂/PABA

À partir de *para*-aminobenzoate tri-isopropoxvde de titane en milieu hydro-organique majoritairement aqueux en présence d'alcoxyde de titane

| | |
|---|---|
| [Ti(OC₃H₇)3(O₂CC₆H₄NH₂)]ₘ | 0,13 g |
| tétra-isopropoxyde de titane [Ti(OC₃H₇)₄]ₘ | 6,75 g |
| Bromure de tétra-*n*-butylammonium (NⁿSu₄Br) | 0,8 g |
| Isopropanol (HOC₃H₇) | 6,0 g |
| Eau (H₂O) | 75,0 g |

On additionne la solution d'isopropanol comprenant [Ti(OC₃H₇)₃(O₂CC₆H₄NH₂)]ₘ + [Ti(OC₃H₇)₄]ₘ dans la solution aqueuse de NⁿBu₄Br portée à reflux et on agite en maintenant le reflux pendant 3 heures. Le solide est récupéré par centrifugation puis lavé à l'eau et à l'éthanol. Après séchage à 70°C pendant 20 heures le matériau est prêt à remploi. Le matériau présente un taux de fonctionnalisation de 1,5% en poids.

### Exemple 3: Préparation d'un matériau mixte TiO₂/Uvinul MS 40^{®}

À partir de 5-benzoyl-4-hydroxy-2-méthoxybenzène sulfonate-tri-isopropoxyde de titane en milieu aqueux

| | |
|---|---|
| [Ti(OC₃H₇)₃(C₁₄H₁₂O₆S)]ₘ | 0,18 g |
| Bromure de tétra-*n*-butylammonium (N"Bu₄Br) | 0,01 g |
| Eau (H₂O) | 50,00 g |

Le [Ti(OC₃H₇)₃(C₁₄H₁₂O₆S)]ₘ est obtenu par réaction équimolaire entre le tétra-isoproxyde de titane [Ti(OC₃H₇)₄] et l'acide 5-benzoyl-4-hydroxy-2-méthoxybenzène sulfonique (Uvinul MS 40^{®}).

On additionne le [Ti(OC₃H₇)₃(C₁₄H₁₂O₆S)]ₘ dans la solution aqueuse de NⁿBu₄Br portée à reflux et on agite en maintenant le reflux pendant 2 heures. Le solide est récupéré par centrifugation puis lavé à l'eau et à l'éthanol. Après séchage à 70°C pendant 20 heures le matériau est prêt à l'emploi.

### Exemple 4 : Préparation d'un matériau mixte TiO₂/Uvinul MS 40^{®}

À partir de 5-benzoyl-4-hydroxy-2-méthoxybenzène sulfonate-tri-isopropoxyde de titane en milieu hydro-organique majoritairement aqueux en présence d'alcoxyde de titane

| | |
|---|---|
| [Ti(OC₃H₇)₃(C₁₄H₁₂O₆S)]ₘ | 0,1 g |
| tétra-isopropoxyde de titane [Ti(OC₃H₇)₄]ₘ | 0,8 g |
| Bromure de tétra-*n*-butylammonium (NⁿBu₄Br) | 0,1 g |
| Isopropanol (HOC₃H₇) | 6,0 g |
| Eau (H₂O) | 75,0 g |

On additionne la solution d'isopropanol comprenant [Ti(OC₃H₇)₃(C₁₄H₁₂O₆S)]ₘ + (Ti(OC₃H₇)₄]ₘ dans la solution aqueuse de NⁿBu_{4B}r portée à reflux et on agite en maintenant le reflux pendant 3 heures. Le solide est récupéré par centrifugation puis lavé à l'eau et à l'éthanol Après séchage à 70°C pendant 20 heures le matériau est prêt à l'emploi.

Tous ces matériaux ont été caractérisés de façon univoque par analyses élémentaires, spectroscopies infrarouge à transformée de Fourier et UV-visible, diffraction des rayons X sur poudre, microscopie électronique à transmission et spectroscopie photoélectronique.

La description ci-après, en référence aux figures annexées, permet de mieux comprendre l'objet de l'invention. Les différentes variantes décrites ci après, lorsqu'elles ne s'excluent pas l'une de l'autre, peuvent être combinées.

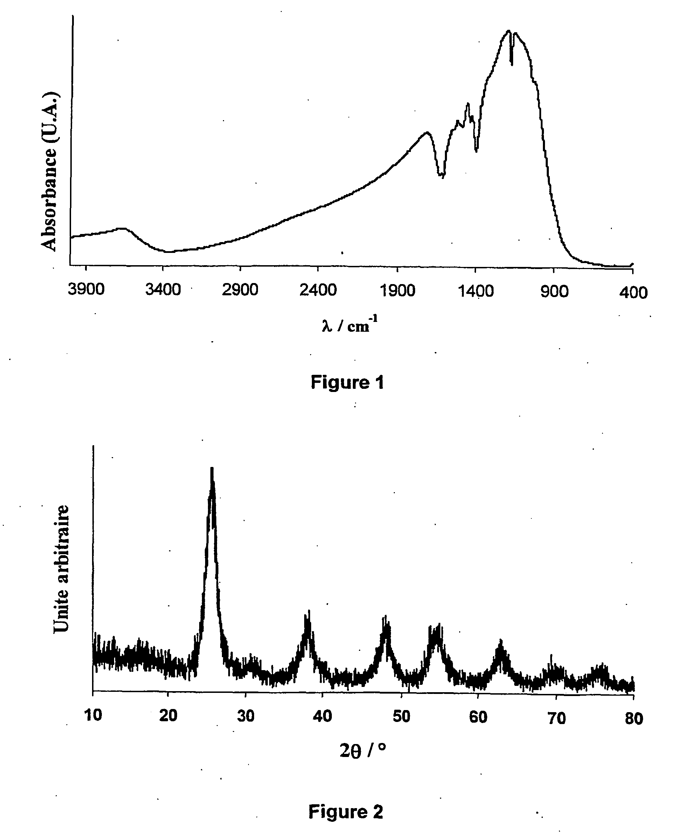

La **Figure 1** est un spectre infra-rouge à transformée de Fourrier d'un matériau mixte de nanoparticules de titane greffées par Uvinul MS-40^{®} (acide 5-benzoyl-4-hydroxy-2-méthoxybenzènesulfonique).

La **Figure 2** est un spectre de diffraction des rayons X sur un matériau mixte de nanoparticules de titane greffées par l'acide *para*-aminobenzoïque (PABA).

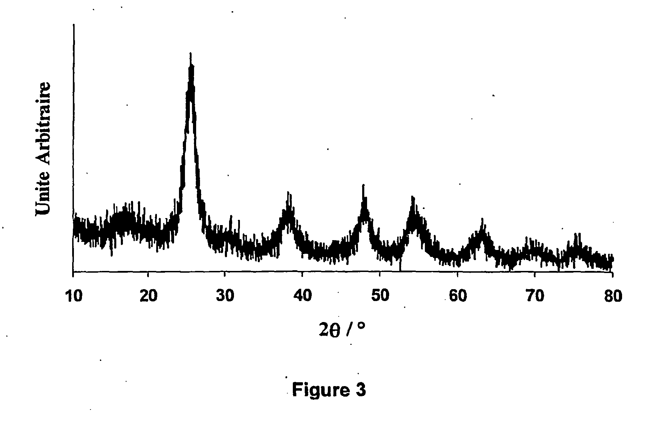

La **Figure 3** est un spectre de diffraction des rayons X sur un matériau mixte de nanoparticules de titane greffées par Uvinul MS-40^{®} (acide 5-benzoyl-4-hydroxy-2-méthoxybenzènesulfonique).

## Revendications

1. Matériau mixte comprenant :
- des nanoparticules d'au moins un dérivé métallique et
- au moins un composé organique dérivé d'acide carboxylique et/ou sulfonique, lié chimiquement de manière covalente auxdites nanoparticules par l'intermédiaire d'au moins une fonction carboxylique et/ou sulfonique,
**caractérisé en ce que** les nanoparticules sont toutes fonctionnalisées.

2. Matériau selon la revendication 1, **caractérisé en ce que** ledit dérivé d'acide est lié chimiquement de manière covalente audit dérivé métallique.

3. Matériau selon la revendication 1 ou 2, **caractérisé en ce que** le dérivé métallique est un métal sous forme oxydée ou réduite, de préférence sous forme oxydée.

4. Matériau selon l'une quelconque des revendications précédentes, **caractérisé en ce que** le dérivé métallique est un oxyde métallique.

5. Matériau selon l'une quelconque des revendications précédentes, **caractérisé en ce que** le dérivé métallique possède des propriétés semi-conductrices.

6. Matériau selon l'une quelconque des revendications précédentes, **caractérisé en ce que** le métal dudit dérivé métallique est choisi dans le groupe constitué par le titane, le zinc, l'étain, le cérium, le zirconium et le cuivre, et leurs mélanges, de préférence dans le groupe constitué par le titane, le zinc, l'étain, le cérium, et leurs mélanges.

7. Matériau selon l'une quelconque des revendications précédentes, **caractérisé en ce que** le dérivé métallique est un oxyde métallique choisi parmi le dioxyde de titane (TiO₂), le monoxyde de zinc (ZnO), le dioxyde d'étain (SnO₂), les oxydes de cérium (Ce₂O₃ et CeO₂), l'oxyde de zirconium (ZrO₂), les oxydes de cuivre (CuO et Cu₂O), et leurs mélanges, de préférence le dérivé métallique contient du titane sous sa forme oxydée, dioxyde de titane (TiO₂).

8. Matériau selon l'une quelconque des revendications précédentes, **caractérisé en ce que** les nanoparticules présentent une granulométrie moyenne comprise entre 1 nm et 50 nm, de préférence encore entre 1 nm et 30 nm, plus préférentiellement entre 1 nm et 20 nm, avantageusement entre 2 nm et 10 nm.

9. Matériau selon l'une quelconque des revendications précédentes, **caractérisé en ce que** le taux de fonctionnalisation est compris entre 0,1% et 30%, de préférence entre 0,5% et 20%, avantageusement entre 1% et 15%, par exemple entre 1,5% et 10% en poids de composant organique par rapport au composant minéral.

10. Matériau selon l'une quelconque des revendications précédentes, **caractérisé en ce que** les nanoparticules sont sous forme cristallisée.

11. Matériau selon l'une quelconque des revendications précédentes, **caractérisé en ce que** ledit composé organique est choisi parmi tout composé organique linéaire, ramifié, cyclique, saturé, insaturé, et/ou aromatique comprenant au moins une fonction acide carboxylique et/ou au moins une fonction acide sulfonique, et de préférence parmi les acides carboxyliques et les acides sulfoniques comportant éventuellement d'autres groupements fonctionnels.

12. Matériau selon l'une quelconque des revendications précédentes, **caractérisé en ce que** ledit composé organique est un acide, sel ou ester, répondant à la formule :
R"-A-Y
dans laquelle
R" représente un radical hydrocarboné comportant éventuellement un ou plusieurs hétéroatomes choisis parmi oxygène, azote, soufre, phosphore, bore et sélénium ;
A-Y représente un groupement carboxylique COOY ou sulfonique SO₃Y, où Y est choisi parmi:
- un atome d'hydrogène;
- un cation provenant d'une amine primaire, secondaire, tertiaire ou quaternaire, ou encore un cation ammonium ;
- un cation d'un métal alcalin d'un métal alcalino-terreux du tableau périodique ; et
- un cation d'un élément de transition des groupes 3, 4, 5, 6, 7, 8, 9, 10, 11 et 12 du tableau périodique ou un cation d'un élément des groupes 13, 14, 15 et 16 du tableau périodique ou un cation d'un élément de la série des lanthanides du tableau périodique, à savoir Ce, Pr, Nd, Pm, Sm, Eu, Gd, Tb, Dy, Ho, Er, Tm, Yb et Lu ; et
- un groupement hydrocarboné saturé ou insaturé linéaire, ramifié ou cyclique, comportant de 1 à 30 atomes de carbone.

13. Matériau selon l'une quelconque des revendications précédentes, **caractérisé en ce que** ledit composé organique est un filtre solaire choisi parmi l'acide *para*-aminobenzoïque, l'acide 5-benzoyl-4-hydroxy-2-méthoxybenzène-sulfonique, l'acide 2-phénylbenzimidazole-5-sulfonique, l'acide 3,3'-(1,4-phénylidènediméthylidène)bis-(7,7-diméthyl-2-oxobicyclo[2,2,1]hept-1-yl-méthanesulfonique) et ses sels, l'acide α-(oxo-2-bornylidène-3)-toluène- 4-sulfonique et ses sels, le 2-cyano-3,3-diphénylacrylate de 2-éthylhexyle, le 4-méthoxycinnamate d'octyle), et le 4-aminobenzoate d'éthyle éthoxylé.

14. Matériau selon l'une quelconque des revendications précédentes, **caractérisé en ce que** ledit composé organique comporte au moins un noyau aromatique, et, de préférence, au moins une fonction acide carboxylique et/ou fonction acide sulfonique dudit composé organique est portée par au moins un noyau aromatique.

15. Matériau selon l'une quelconque des revendications précédentes, **caractérisé en ce qu'**il comprend des nanoparticules de dioxyde de titane à la surface desquelles est greffé de manière covalente au moins un dérivé d'acide carboxylique et/ou d'acide sulfonique par l'intermédiaire d'au moins une fonction carboxylique et/ou sulfonique.

16. Matériau selon l'une quelconque des revendications précédentes, **caractérisé en ce qu'**il comprend des nanoparticules de dioxyde de titane à la surface desquelles est greffé de manière covalente au moins un dérivé d'acide carboxylique et/ou d'acide sulfonique par l'intermédiaire d'au moins une fonction carboxylique et/ou sulfonique, ledit acide étant choisi dans le groupe constitué par l'acide *para*-aminobenzoïque, l'acide 5-benzoyl-4-hydroxy-2-méthoxybenzène-sulfonique, l'acide 2-phénylbenzimidazole-5-sulfonique, ainsi que leurs sels ou esters, acceptables sur le plan cosmétique.

17. Procédé de préparation d'un matériau comprenant des nanoparticules d'un métal et au moins un composé organique dérivé d'acide carboxylique et/ou sulfonique, selon l'une quelconque des revendications précédentes, par polymérisation inorganique d'au moins un précurseur hydrolysable d'un métal modifié par au moins un acide carboxylique et/ou sulfonique, mis en présence d'eau ou d'un mélange eau/solvant.

18. Procédé selon la revendication 17, dans lequel ledit précurseur est choisi parmi les alcoxydes, les amidures et les halogénures dudit métal, et de préférence le précurseur est un alcoxyde dudit métal.

19. Procédé selon la revendication 18, dans lequel ledit précurseur répond à la formule (I) suivante :
[MOₓR'_{z}(AR")_{w}(OR)_{(v-2x-z-w)}]ₘ (I)
dans laquelle :
- M représente un atome de métal avantageusement choisi parmi le titane, le zinc, le cérium, le zirconium et le cuivre ;
- O représente l'atome d'oxygène ;
- v représente la valence du métal M ;
- x est un nombre supérieur ou égal à zéro et inférieur à v/2 ; (0 ≤ x < v/2) ;
- z est un nombre supérieur ou égal à zéro et inférieur à v ; (0 ≤ z < v) ;
- w est un nombre supérieur à zéro et inférieur ou égal à v ; (0 < w ≤ v) ;
- m est le taux d'oligomérisation du précurseur de formule (I) et représente un nombre entier supérieur ou égal à 1, de préférence compris entre 1 et 100, bornes incluses ;
- 2x + z + w ≤ v ;
- A représente un groupe CO₂ ou SO₃ ;
- R est choisi parmi un radical alkyle, linéaire ou ramifié, comportant de 1 à 30 atomes de carbone, un radical cycloalkyle substitué ou non substitué comportant de 3 à 9 atomes de carbone endocycliques, et un radical aryle substitué ou non substitué comportant de 6 à 10 atomes ;
- R' représente un atome d'halogène choisi parmi fluor, chlore, brome, iode et astate, ou représente le groupe hydroxyle ; et
- R" représente un radical hydrocarboné comportant éventuellement un ou plusieurs hétéroatomes choisis parmi oxygène, azote, soufre, phosphore, bore et sélénium.

20. Procédé selon la revendication 18, dans lequel ledit précurseur répond à la formule (I_{Ti}) suivante :
[TiOₓR'_{z}(AR")_{w}(OR)_{(4-2x-z-w)}]m (I_{Ti})
dans laquelle :
- x est un nombre supérieur ou égal à zéro et inférieur à 2 ; (0 ≤ x < 2) ;
- z est un nombre supérieur ou égal à zéro et inférieur à 4 ; (0 ≤ z < 4) :
- w est un nombre supérieur à zéro et inférieur ou égal à 4 ; (0 < w ≤ 4) ;
- 2x + z + w ≤ 4 ; et
- O, m, R, R' et R" sont tels que définis dans la revendication 15.

21. Procédé selon l'une quelconque des revendications 17 à 20, dans lequel la polymérisation inorganique d'au moins un précurseur hydrolysable de formule (I) ou de formule (I_{Ti}) est réalisée en présence d'un autre composé métallique hydrolysable, éventuellement non modifié par un composé organique.

22. Procédé selon l'une quelconque des revendications 17 à 21, **caractérisé en ce que** la polymérisation inorganique est réalisé en présence d'au moins un sel ionique, présent en une quantité comprise entre 0,5% et 20% en poids, de préférence entre 1% et 10% en poids, par rapport au précurseur métallique de départ.

23. Procédé selon l'une quelconque des revendications 17 à 22, **caractérisé en ce que** la polymérisation inorganique est conduite à une température comprise entre la température ambiante et la température de reflux du milieu réactionnel, par exemple à une température comprise entre 15°C et 150°C, avantageusement entre 25°C et 130°C, de préférence entre 80°C et 120°C, de préférence environ 100°C.

## Claims

1. Composite material comprising:
- nanoparticles of at least one metal derivative and
- at least one organic compound derived from a carboxylic and/or sulphonic acid which is covalently chemically bound to said nanoparticles via at least one carboxylic and/or sulphonic functional group,
**characterised in that** the nanoparticles are all functionalized.

2. Material according to claim 1, **characterised in that** said acid derivative is covalently chemically bound to said metal derivative.

3. Material according to either claim 1 or claim 2, **characterised in that** the metal derivative is a metal in oxidised or reduced form, preferably in oxidised form.

4. Material according to any one of the preceding claims, **characterised in that** the metal derivative is a metal oxide.

5. Material according to any one of the preceding claims **characterised in that** the metal derivative has semiconductor properties.

6. Material according to any one of the preceding claims, **characterised in that** the metal of said metal derivative is selected from the group consisting of titanium, zinc, tin, cerium, zirconium, copper, and mixtures thereof, and preferably from the group consisting of titanium, zinc, tin, cerium, and mixtures thereof.

7. Material according to any one of the preceding claims, **characterised in that** the metal derivative is a metal oxide selected from titanium dioxide (TiO₂), zinc monoxide (ZnO), tin dioxide (SnO₂), the cerium oxides (Ce₂O₃ and CeO₂), zirconium oxide (ZrO₂), the copper oxides (CuO and Cu₂O), and mixtures thereof, preferably the metal derivative contains titanium in its oxidised form, titanium dioxide (TiO₂).

8. Material according to any one of the preceding claims, **characterised in that** the nanoparticles have a mean particle size of between 1 nm and 50 nm, preferably between 1 nm and 30 nm, and more preferably between 1 nm and 20 nm, and advantageously between 2 nm and 10 nm.

9. Material according to any one of the preceding claims, **characterised in that** the functionalisation level is between 0.1 % and 30 %, preferably between 0.5 % and 20 %, and advantageously between 1 % and 15 %, for example between 1.5% and 10 % by weight of organic component based on the mineral component.

10. Material according to any one of the preceding claims **characterised in that** the nanoparticles are in crystalline form.

11. Material according to any one of the preceding claims, **characterised in that** said organic compound is selected from any linear, branched, cyclic, saturated, unsaturated and/or aromatic organic compound comprising at least one carboxylic acid functional group and/or at least one sulphonic acid functional group, and preferably from the carboxylic acids and the sulphonic acids optionally comprising other functional groups.

12. Material according to any one of the preceding claims, **characterised in that** said organic compound is an acid, salt or ester corresponding to the formula:
R"-A-Y
in which
R" represents a hydrocarbon radical optionally containing one or more heteroatoms selected from oxygen, nitrogen, sulphur, phosphorus, boron and selenium;
A-Y represents a carboxylic group COOY or sulphonic group SO₃Y, where Y is selected from:
- a hydrogen atom;
- a cation derived from a primary, secondary, tertiary or quaternary amine, or else an ammonium cation;
- a cation of an alkali metal or of an alkaline-earth metal from the periodic table; and
- a cation of a transition element from groups 3, 4, 5, 6, 7, 8, 9, 10, 11 and 12 of the periodic table or a cation of an element from groups 13, 14, 15 and 16 of the periodic table or a cation of an element from the lanthanide series of the periodic table, namely Ce, Pr, Nd, Pm, Sm, Eu, Gd, Tb, Dy, Ho, Et, Tm, Yb and Lu; and
- a saturated or unsaturated, linear, branched or cyclic hydrocarbon group, containing 1 to 30 carbon atoms.

13. Material according to any one of the preceding claims, **characterised in that** said organic compound is a sun filter selected from *para*-aminobenzoic acid, 5-benzoyl-4-hydroxy-2-methoxybenzene sulphonic acid, 2-phenylbenzimidazole-5-sulphonic acid, 3,3'-(1,4-phenylidenedimethylidene)bis-(7,7-dimethyl-2-oxobicyclo[2,2,1]hept-1-yl-methanesulphonic) acid and the salts thereof, α-(oxo-2-bornylidene-3)-toluene-4-sulphonic acid and the salts thereof, 2-ethyl hexyl 2-cyano-3,3-diphenylacrylate, octyl 4-methoxycinnamate), and ethoxylated ethyl 4-aminobenzoate.

14. Material according to any one of the preceding claims, **characterised in that** said organic compound comprises at least one aromatic ring, and, preferably, at least one carboxylic acid functional group and/or sulphonic acid functional group of said organic compound is carried on at least one aromatic ring.

15. Material according to any one of the preceding claims, **characterised in that** it comprises titanium dioxide nanoparticles, at the surface of which at least one carboxylic acid and/or sulphonic acid derivative is covalently grafted via at least one carboxylic and/or sulphonic functional group.

16. Material according to any one of the preceding claims, **characterised in that** it comprises titanium dioxide nanoparticles, at the surface of which at least one carboxylic acid and/or sulphonic acid derivative is covalently grafted via at least one carboxylic and/or sulphonic functional group, said acid being selected from the group consisting of *para*-aminobenzoic acid, 5-benzoyl-4-hydroxy-2-methoxybenzene-sulphonic acid, 2-phenylbenzimidazole-5-sulphonic acid, as well as the cosmetically acceptable salts or esters thereof.

17. Method for preparing a material comprising nanoparticles of a metal and at least one organic compound derived from carboxylic and/or sulphonic acid, according to any one of the preceding claims, by inorganic polymerisation of at least one hydrolysable precursor of a metal modified by at least a carboxylic and/or sulphonic acid, placed in the presence of water or a mixture of water and solvent.

18. Method according to claim 17, wherein said precursor is selected from the alkoxides, the amides and the halides of said metal, and the precursor is preferably an alkoxide of said metal.

19. Method according to claim 18, wherein said precursor corresponds to the following formula (I):
[MOₓR'_{z}(AR")_{w}(OR)_{(v-2x-z-w})]ₘ (I)
in which:
- M represents an atom of a metal advantageously selected from titanium, zinc, cerium, zirconium, and copper;
- O represents an oxygen atom
- v represents the valency of the metal M;
- x is a number greater than or equal to zero and less than v/2; (0 ≤ x < v/2);
- z is a number greater than or equal to zero and less than v; (0 ≤ z < v);
- w is a number greater than zero and less than or equal to v; (0 < w ≤ v);
- m is the rate of oligomerisation of the precursor of formula (I) and is an integer greater than or equal to 1, preferably from 1 to 100 inclusive;
- 2x + z + w ≤ v;
- A represents a CO₂ or SO₃ group;
- R is selected from a linear or branched alkyl radical containing 1 to 30 carbon atoms, a substituted or unsubstituted cycloalkyl radical containing 3 to 9 endocyclic carbon atoms, and a substituted or unsubstituted aryl radical containing 6 to 10 atoms;
- R' represents a halogen atom selected from fluorine, chlorine, bromine, iodine and astatine, or represents a hydroxyl group; and
- R" represents a hydrocarbon radical optionally containing one or more heteroatoms selected from oxygen, nitrogen, sulphur, phosphorus, boron and selenium.

20. Method according to claim 18, wherein said precursor corresponds to the following formula (I_{Ti}):
[TiOₓR'_{z}(AR")_{w}(OR)_{(4-2x-z-w)}]ₘ (I_{Ti})
in which:
- x is a number greater than or equal to zero and less than 2; (0 ≤ x < 2);
- z is a number greater than or equal to zero and less than 4; (0 ≤ z < 4);
- w is a number greater than zero and less than or equal to 4 ; (0 < w ≤ 4);
- 2x + z + w ≤ 4; and
- O, m, R, R' and R" are as defined in claim 15.

21. Method according to any one of claims 17 to 20, wherein the inorganic polymerisation of at least one hydrolysable precursor of formula (I) or of formula (I_{Ti}) is carried out in the presence of another hydrolysable metal compound, optionally unmodified by an organic compound.

22. Method according to any one of claims 17 to 21, **characterised in that** the inorganic polymerisation is carried out in the presence of at least one ionic salt, which is present in a quantity of between 0.5 % and 20 % by weight, preferably between 1 % and 10 % by weight, based on the original metal precursor.

23. Method according to any one of claims 17 to 22, **characterised in that** the inorganic polymerisation is carried out at a temperature between the ambient temperature and the reflux temperature of the reaction medium, for example at a temperature of between 15 °C and 150 °C, advantageously between 25 °C and 130 °C, preferably between 80 °C and 120 °C, and preferably at approximately 100 °C.

## Patentansprüche

1. Verbundmaterial umfassend:
- Nanopartikel von mindestens einem Metallderivat und
- mindestens eine organische Verbindung eines Carbonsäure- und/oder Sulfonsäurederivats, die chemisch in kovalenter Weise an die Nanopartikel mittels mindestens einer Carboxyl- und/oder Sulfonfunktion gebunden ist,
**dadurch gekennzeichnet, dass** die Nanopartikel alle funktionalisiert sind

2. Material nach Anspruch 1, **dadurch gekennzeichnet, dass** das Säurederivat chemisch in kovalenter Weise an das Metallderivat gebunden ist.

3. Material nach Anspruch 1 oder Anspruch 2, **dadurch gekennzeichnet, dass** das Metallderivat ein Metall in oxidierter oder reduzierter Form, vorzugsweise oxidierter Form ist.

4. Material nach einem beliebigen der vorhergehenden Ansprüche, **dadurch gekennzeichnet, dass** das Metallderivat ein Metalloxid ist.

5. Material nach einem beliebigen der vorhergehenden Ansprüche, **dadurch gekennzeichnet, dass** das Metallderivat halbleitende Eigenschaften besitzt.

6. Material nach einem beliebigen der vorhergehenden Ansprüche, **dadurch gekennzeichnet, dass** das Metall des Metallderivats aus der von Titan, Zink, Zinn, Cer und ihren Mischungen gebildeten Gruppen ausgewählt ist.

7. Material nach einem beliebigen der vorhergehenden Ansprüche, **dadurch gekennzeichnet, dass** das Metallderivat ein Metalloxid ist, das aus Titandioxid (TiO₂), Zinkmonoxid (ZnO), Zinndioxid (SnO₂), Ceroxiden (Cr₂O₃, CeO₂), Zirkonoxid (ZrO₂). Kupferoxiden (CuO und Cu₂O) und ihren Mischungen ausgewählt ist, vorzugsweise enthält das Metallderivat Titan in seiner oxidierten Form Titandioxid (TiO₂).

8. Material nach einem beliebigen der vorhergehenden Ansprüche, **dadurch gekennzeichnet, dass** die Nanopartikel eine mittlere Kornklassierung zwischen 1 nm und 50 nm, vorzugsweise zwischen 1 nm und 30 nm, noch bevorzugter zwischen 1 nm und 20 nm, vorteilhafterweise zwischen 2 nm und 10 nm aufweisen.

9. Material nach einem beliebigen der vorhergehenden Ansprüche, **dadurch gekennzeichnet, dass** der Funktionalisierungsgrad eingeschlossen ist zwischen 0,1 Gew.% und 30 Gew.-%, vorzugsweise zwischen 0,5 Gew.-% und 20 Gew.-%, vorteilhafterweise zwischen 1 Gew.-% und 15 Gew.-%, beispielsweise zwischen 1,5 Gew.-% und 10 Gew.-% an organischer Komponente in Bezug auf die mineralische Komponente.

10. Material nach einem beliebigen der vorhergehenden Ansprüche, **dadurch gekennzeichnet, dass** die Nanopartikel in kristallisierter Form vorliegen.

11. Material nach einem beliebigen der vorhergehenden Ansprüche, **dadurch gekennzeichnet, dass** die organische Verbindung aus jeglicher linearer, verzweigter, zyklischer, gesättigter, ungesättigter und/oder aromatischer Verbindung, die mindestens eine Carbonsäurefunktion und/oder eine Sulfonsäurefunktion umfasst und vorzugsweise aus Carbonsäuren und Sufonsäuren, die möglicherweise andere funktionelle Gruppen umfassen, ausgewählt ist.

12. Material nach einem beliebigen der vorhergehenden Ansprüche, **dadurch gekennzeichnet, dass** die organische Verbindung eine Säure, ein Salz oder ein Ester ist, die der Formel
R"-A-Y
genügen, in der R" ein bituminöses Radikal darstellt, das möglicherweise ein oder mehrere Heteroatome, ausgewählt aus Sauerstoff, Stickstoff, Schwefel, Phosphor, Bor und Selen, umfasst;
A-Y eine Carbongruppe COOY oder Sulfongruppe SO₃Y darstellt, wobei Y gewählt ist aus:
- einem Wasserstoffatom,
- einem Kation, das von einem Primär-, Sekundär-, Tertiär- oder Quartiäramin herrührt, oder einem Ammoniumkation;
- einem Kation eines alkalischen Metalls eines erdalkalischen Metalls der Tabelle des Periodensystems; und
- einem Kation eines Übergangselements der Gruppen 3, 4, 5, 6, 7, 8, 9, 10, 11 und 12 der Tabelle des Periodensystems oder einem Kation eines Elements der Gruppen 13, 14, 15 und 16 der Tabelle des Periodensystems oder einem Kation eines Elements der Reihe der Lanthanide der Tabelle des Periodensystems, nämlich Ce, Pr, Nd, Pm, Sm, Eu, Gd, Tb, Dy, Ho, Er, Tm, Yb und Lu und
- einer linearen gesättigten oder ungesättigten, verzweigten oder zyklischen Kohlenwasserstoff-Gruppe, die 1 bis 30 Kohlenstoffatome umfasst.

13. Material nach einem beliebigen der vorhergehenden Ansprüche, **dadurch gekennzeichnet, dass** die organische Verbindung ein Sonnenschutzmittel ist, ausgewählt aus Para-Aminobenzoesäure, der 5-Benzoyl-4-hydroxy-2-methoxybenzol-sulfonsäure, der 2-Phenyl-benzimidazol-5-sulfonsäure, der 3,3'-(1,4-Phenylidendimethyliden)bis-(7,7-dimethyl-2-oxobicyclo[2,2,1]hept-1-yl-methansulfonsäure und ihren Salzen, der α-(oxo-2-Bornyliden-3)-toluen-4-sulfonsäure und ihren Salzen, den 2-Cyan-3,3-diphenylacrylat des 2-Ethylhexyl, dem 4-Methoxycinnamat von Octyl und dem 4-Aminobenzoat von ethoxyliertem Ethyl.

14. Material nach einem beliebigen der vorhergehenden Ansprüche, **dadurch gekennzeichnet, dass** die organische Verbindung mindestens einen aromatischen Kern aufweist und vorzugsweise mindestens eine Carbonsäure- und/oder Sulfonsäurefunktion der organischen Verbindung von mindestens einem aromatischen Kern getragen wird.

15. Material nach einem beliebigen der vorhergehenden Ansprüche, **dadurch gekennzeichnet, dass** es Titandioxid-Nanopartikel umfasst, an deren Ober fläche in kovalenter Weise mindestens ein Carbonsäure- und/oder Sulfonsäurederivat mittels mindestens einer Carboxyl- und/oder Sulfonfunktion gepfropft ist.

16. Material nach einem beliebigen der vorhergehenden Ansprüche, **dadurch gekennzeichnet, dass** es Titandioxid-Nanopartikel umfasst, an deren Oberfläche in kovalenter Weise mindestens ein Carbonsäure- und/oder Sulfonsäurederivat mittels mindestens einer Carboxyl- und/oder Sulfonfunktion gepfropft ist, wobei die Säure aus einer Gruppe ausgewählt ist bestehend aus Para-Aminobenzoesäure, 5-Benzoyl-4-hydroxy-2-methoxybenzol-sulfonsäure, 2-Phenylbenzimidazol-5-sulfonsäure sowie ihren Salzen oder Estern ausgewählt sind, die im kosmetischen Bereich annehmbar sind.

17. Verfahren zum Bereiten eines Materials, das Nanopartikel eines Metalls und mindestens eine organische Verbindung eines Carbonsäure- und/oder Sulfonsäurederivats umfasst, nach einem beliebigen der vorhergehenden Ansprüche durch anorganische Polymerisation mindestens eines hydrolysierbaren Vorläufers eines Metalls, der durch mindestens eine Carbon- und/oder Sulfonsäure modifiziert ist, durchgeführt im Beisein von Wasser und/oder einer Mischung aus Wasser/Lösungsmitteln.

18. Verfahren nach Anspruch 17, bei dem der Vorläufer ausgewählt ist aus den Alkoxiden, Amiden und den Halogeniden des Metalls und vorzugsweise ist der Vorläufer ein Alkoxid des Metalls.

19. Verfahren nach Anspruch 18, bei dem der Vorläufer die folgende Formel (I) erfüllt:
[MO_{X}R'_{Z}(AR")_{W}(OR)_{(V-2X-Z-W)}]m (I)
bei der
- M ein Metallatom, vorzugsweise ausgewählt aus Titan, Zink, Cer, Zirkon und Kupfer darstellt;
- O das Sauerstoffatom darstellt;
- v die Valenz des Metalls M ist;
- x eine Zahlgröße oder gleich null und kleiner als v/2 ist; (0≤x<v/2);
- z eine Zahl größer oder gleich 0 und kleiner als v ist; (0≤z<v);
- w eine Zahl größer als 0 und kleiner oder gleich v ist; (0<w≤v);
- m die Oligomerisationsrate des Vorläufers der Formel (I) ist und eine ganze Zahl größer oder gleich 1, vorzugsweise zwischen 1 und 10, Grenzen eingeschlossen, darstellt;
- 2x + z + w ≤ v;
- A eine Gruppe CO₂ oder SO₃ darstellt,
- R ausgewählt ist aus einem linearen oder verzweigten Alkylradikal, der 1 bis 30 Kohlenstoffatome umfasst, einem substituierten oder nicht substituierten Cycloalkylradikal, der 3 bis 9 endozyklische Kohlenstoffatome aufweist, und ein substituiertes oder nicht substituiertes Arylatom, das 6 bis 10 Atome aufweist;
- R' ein Halogenatom darstellt, ausgewählt aus Fluor, Chlor, Brom, Jod oder Astat, oder eine Hydroxylgruppe darstellt; und
- R" ein Kohlenwasserstoff-Radikal darstellt, das möglicherweise ein oder mehrere Heteroatome, ausgewählt aus Sauerstoff, Stickstoff, Schwefel, Phosphor, Bor und Selen, aufweist.

20. Verfahren nach Anspruch 18, bei dem der Vorläufer die folgende Formel (I_{Ti}) erfüllt:
[TIOₓR'_{z}(AR")_{w}(OR)_{(4-zx-z-w}]m (Iᵣᵢ)
in der
- x eine Zahl größer oder gleich null und kleiner als 2 ist; (0≤x<2);
- z eine Zahl größer oder gleich null und kleiner als 4 ist; (0≤z<4);
- w eine Zahl größer als null und kleiner oder gleich 4 ist; (0<w≤4);
- 2x + z + w ≤ 4; und
- O, m, R, R' und R" so definiert sind, wie in Anspruch 19.

21. Verfahren nach einem beliebigen der Ansprüche 17 bis 20, bei dem die anorganische Polymerisation mindestens eines hydrolysierbaren Vorläufers der Formel (I) oder der Formel (I_{Ti}), bei Vorhandensein einer anderen hydrolysierbaren Metallverbindung, möglicherweise nicht durch eine organische Verbindung modifiziert, durchgeführt wird.

22. Verfahren nach einem beliebigen der Ansprüche 17 bis 21, **dadurch gekennzeichnet, dass** die anorganische Polymerisation bei Vorhandensein mindestens eines ionischen Salzes durchgeführt wird, das in einer Menge zwischen 0,5 Gew.-% und 20 Gew.-%, vorzugsweise zwischen 1 Gew.-% und 10 Gew.-% in Bezug auf den Ausgangsmetallvorläufer vorhanden ist.

23. Verfahren nach einem beliebigen der Ansprüche 17 bis 22, **dadurch gekennzeichnet, dass** die anorganische Polymerisation bei einer Temperatur zwischen der Umgebungstemperatur und der Rückflusstemperatur des Reaktionsmediums, beispielsweise bei einer Temperatur zwischen 15°C und 150°C, vorzugswese zwischen 25°C und 130°C, noch bevorzugter zwischen 80°C und 120°C, besonders bevorzugt bei etwa 100°C durchgeführt wird.
